# EUROPÄISCHE PATENTSCHRIFT

(11) **EP 1 584 943 B1**
(45) Veröffentlichungstag und Bekanntmachung des Hinweises auf die Patenterteilung: **07.05.2008**
(21) Anmeldenummer: 05007361.8
(22) Anmeldetag: 05.04.2005
(51) Int. Cl.: G01S 3/74

(54) **Hochauflösendes Peilverfahren mit FFT-Breitbandpeilsensorik**
High resolution direction finding method with broad band FFT sensors
Méthode de goniomètrie à haute résolution employant des capteurs FFT à large bande

(30) Priorität: 10.04.2004 DE 102004017715
(43) Veröffentlichungstag der Anmeldung: 12.10.2005
(73) Patentinhaber: EADS Deutschland GmbH, 85521 Ottobrunn (DE)
(72) Erfinder: Benz, Peter Arnulf, Dr., 89275 Elchingen (DE); Schopp, Manfred, 89134 Blaustein (DE)
(74) Vertreter: Meel, Thomas

(56) Entgegenhaltungen:
- EP-A- 1 079 461
- WO-A-20/04049498
- US-A- 4 975 710
- US-A- 5 898 402
- WAX M ET AL: "DETECTION OF THE NUMBER OF COHERENT SIGNALS BY THE MDL PRINCIPLE" IEEE TRANSACTIONS ON ACOUSTICS, SPEECH AND SIGNAL PROCESSING, IEEE INC. NEW YORK, US, Bd. 37, Nr. 8, August 1989 (1989-08), Seiten 1190-1196, XP001033542 ISSN: 0096-3518
- WAX M ET AL: "DETECTION OF SIGNALS BY INFORMATION THEORETIC CRITERIA" IEEE TRANSACTIONS ON ACOUSTICS, SPEECH AND SIGNAL PROCESSING, IEEE INC. NEW YORK, US, Bd. ASSP-33, Nr. 2, April 1985 (1985-04), Seiten 387-392, XP000992946 ISSN: 0096-3518

## Beschreibung

Die Erfindung betrifft ein Peilverfahren mit FFT-Breitbandpeilsensorik. Betrachtet werden FFT-basierte moderne Vielkanalpeilsysteme mit einer Mehrzahl n (typische Werte für n: 3 bis 5) paralleler FFT-basierter Breitbandpeilempfängern. In jedem Peilempfänger wird das breitbandige Empfangssignal mittels FFT-Filterbank in schmalbandige FFT-Kanäle zerlegt. Das System berechnet aus den Daten der n Peilempfänger für alle FFT-Kanäle parallel und schritthaltend Peilwerte. Die Peilwertberechnung erfolgt nach herkömmlichen Verfahren z.B. Interferometrie oder Watson-Watt. Diese Verfahren liefern pro FFT-Kanal, in dem Signalenergie empfangen wird, ein Peilergebnis. Mit wachsenden Simultanbandbreiten und unverändert hohen Anforderungen an die FFT-Auflösung sind hierzu mit steigender Tendenz hohe Prozessleistungen erforderlich. Dabei entspricht die erforderliche Rechenleistung in jedem FFT-Kanal der eines herkömmlichen schmalbandigen Peilsystems.

Die angewendeten Peilwertberechnungsverfahren sind unzureichend, wenn sich mehrere Wellen unterschiedlicher Einfallsrichtungen am Empfangsort spektral überlagern und eine Trennung durch Filterung in Frequenz und Zeit nicht möglich ist. Dies tritt in verschiedenen Anwendungsbereichen (z.B. luftgestützte Erfassung mit stark erweitertem Radiohorizont, Erfassung in der Kurzwelle oder Erfassung zellularer Netze) in Form von Gleichkanalüberlagerung mehrerer Emitter oder von Mehrwegeausbreitung auf.

In solchen Fällen spektraler Überdeckung können mittels so genannter hochauflösender Verfahren (im folgenden auch mit HA abgekürzt, im Englischen allgemein als Superresolution bezeichnet) richtige Peilwerte für die einzelnen Wellen des Signalgemisches berechnet werden. Typischerweise liegt jedoch die hierfür benötigte Rechenleistung abhängig von Verfahren, Antennenarray und Signalszenario um den Faktor 10 - 100 höher als für die herkömmlichen Peilwertberechnungsverfahren. Als Hardware notwendig sind geeignete Antennenarrays und m gleichlaufende Empfangskanäle (FFT-basierte Breitbandpeilempfänger), mit denen die Signale der einzelnen Antennenelemente weiterverarbeitet werden. Hierbei handelt es sich um an sich bekannte Komponenten. Die Zahl m, die die Anzahl an Empfangszügen des hochauflösenden Systems bezeichnet, beträgt jedoch typisch 5 - 10 und ist somit höher als bei herkömmlichen FFT-Breitbandpeilern. Mit m Empfangszügen sind pro Frequenz bis zu m-1 Wellen parallel peilbar.

Für einen Breitbandpeiler mit hoher Simultanbandbreite und vielen parallel zu behandelnden FFT-Kanälen ist die Anwendung hochauflösender Algorithmik aus Kosten- bzw. Ressourcengründen deshalb bislang nicht üblich.

In der US 5,898,402 ist ein Peilempfänger beschrieben, mit dem zwei unterschiedliche Peilalgorithmen angewandt werden können. Bei der ersten Methode wird davon ausgegangen, dass über die gesamte Signalbandbreite zur selben Zeit lediglich ein Signal empfangen wird. Gemäß der zweiten Methode können über der gesamten Signalbandbreite auch mehrere Signale gleichzeitig empfangen werden. Das zu bearbeitende Signalband wird mittels FFT-Analyse in einzelne FFT-Kanäle zerlegt, wobei für die weitere Verarbeitung die Kanäle ausgewählt werden, in denen ein Signal empfangen wurde.

Aufgabe der Erfindung ist es, die bekannten Peilverfahren für FFT-basierte breitbandige Peilsensorik derart zu erweitern, dass auch in Fällen spektraler Überdeckung die Peilwerte der einzelnen Wellen des Signalgemischs zuverlässig ermittelt werden können, wobei die benötigte Prozessleistung im wesentlichen durch die bei den herkömmlichen FFT-Breitbandpeilverfahren genutzten Prozessressourcen aufgebracht werden kann.

Diese Aufgabe wird mit dem Verfahren nach Patentanspruch 1 gelöst. Vorteilhafte Ausführungen der Erfindung sind Gegenstand von Unteransprüchen.

Die hier beschriebene Erfindung löst diese Aufgabe durch ein zweistufiges Peilverfahren, in das herkömmliche Peilalgorithmik und Superresolution eingebunden sind und welches Mehrwellenpeilfähigkeit mit adaptiv optimiertem Einsatz der benötigten Prozessleistung ermöglicht. Die Berechnungen beider Verfahrensstufen können auf denselben Rohdaten erfolgen. Das Verfahren zeichnet sich dadurch aus, dass an Hand eines Mehrwellendetektionsprozesses für jeden FFT-Kanal individuell entschieden wird, ob eine Peilwertberechnung mit einem rechenintensiven Superresolution-Verfahren erforderlich ist oder nicht. Die Auswahl an FFT-Kanälen, für die Superresolution angewandt wird, erfolgt somit adaptiv entsprechend der jeweiligen aktuellen Situation im Signalszenario. Für die übrigen FFT-Kanäle erfolgt die Berechnung der Peilergebnisse nach deutlich weniger rechenintensiven herkömmlichen Verfahren, wie z.B. die an sich bekannten interferometrischen Verfahren. Auf diese Weise kann die Superresolution-Technologie auch in Verbindung mit Breitbandsensorik effizient realisiert werden. Die erforderliche Prozessleistung bleibt relativ gering und liegt im Rahmen der herkömmlichen FFT-Breitbandpeilverfahren.

Als Hardware notwendig sind geeignete Antennenarrays und gleichlaufende Empfangskanäle (FFT-basierte Breitbandpeilempfänger - bevorzugt 5 bis 10 je nach zu erwartenden Signalszenarien einer Applikation auch darüber), mit denen die Signale der einzelnen Antennenelemente weiterverarbeitet werden. Hierbei handelt es sich um an sich bekannte Komponenten.

Die erforderliche Prozessleistung zur Signalverarbeitung hängt u.a. vom verwendeten Antennenarray, von der eingesetzten Superresolution-Algorithmik und der Zahl der Empfangskanäle ab. Realistisch sind Rechenleistungen pro FFT-Kanal von ein bis zwei Größenordnungen über herkömmlicher Korrelationsinterferometrie, dem im V/UHF-Bereich am meisten verbreiteten Verfahren. Bei dynamischer Zuordnung der verfügbaren Signalverarbeitungs-Kapazität bedeutet dies z.B.: Die zur Berechnung von Peilergebnissen für 800 FFT-Kanäle in der ersten Stufe des Verfahrens erforderliche Prozessleistung wäre ausreichend zur Berechnung in 8-80 FFT-Kanälen der zweiten Stufe mit Superresolution-Verfahren.

### Vorteile der Erfindung

Das erfindungsgemäße Verfahren ist insbesondere bei luftgestütztem Einsatz von Bedeutung. Dort ist die spektrale Belegungsdichte beim Empfang hoch. Der Radiohorizont ist stark erweitert, die Erfassungsreichweite ist entsprechend erhöht. In Folge davon treten jedoch Mehrfachbelegungen auf, die die abstandsfähige Erfassung insbesondere schwacher Signale verhindern, weil diese von stärkeren Signalen überdeckt werden. Die Fähigkeit zur Signaltrennung bei Mehrfachbelegung ist deshalb unverzichtbar, muss an Bord luftgestützter Plattformen aber mit beschränkter Prozessleistung erbracht werden können. Die Erfindung stellt hierzu ein geeignetes Verfahren zur Verfügung, die das beschriebene Ressourcenproblem hinsichtlich Prozessleistung löst.

Die Erfindung ermöglicht den quasiparallelen Einsatz herkömmlicher und hochauflösender Verfahren unter Verwendung gemeinsam genutzter Hardware-Ressourcen. Beide Verfahren können mit denselben Abtastwerten der Antennensignale durchgeführt werden. Die Rohdaten werden hierzu zwischengespeichert. Neben der Ressourceneinsparung ist ein weiterer Vorteil des erfindungsgemäßen Verfahrens gegenüber separatem Breitband- und schmalbandigem Superresolution-System mit Kommandierung des Superresolution-Systems im Abhängebetrieb (Abhängebetrieb = sequentieller Betrieb zweier Systeme, bei dem das breitbandige System das schmalbandige einweist) darin zu sehen, dass kein zeitlicher Versatz mit Verlust des entsprechenden Signalabschnitts auftritt. Superresolution ist innerhalb des erfindungsgemäßen Verfahrens als Zusatzfunktionalität rein softwaremäßig definiert.

Durch dynamische Ressourcenzuordnung wird eine Anpassung an die jeweils aktuelle Erfassungssituation ermöglicht und die im System bereitzustellende Rechenleistung minimiert..

Die gesamte zweistufige Prozesskette ist automatisierbar.

Überlagerte Signale werden nicht nur peilbar, sondern nach raumselektiver Filterung auch für die weitere Bearbeitung verfügbar; schwache, von stärkeren Signalen überdeckte Signale werden erfassbar.

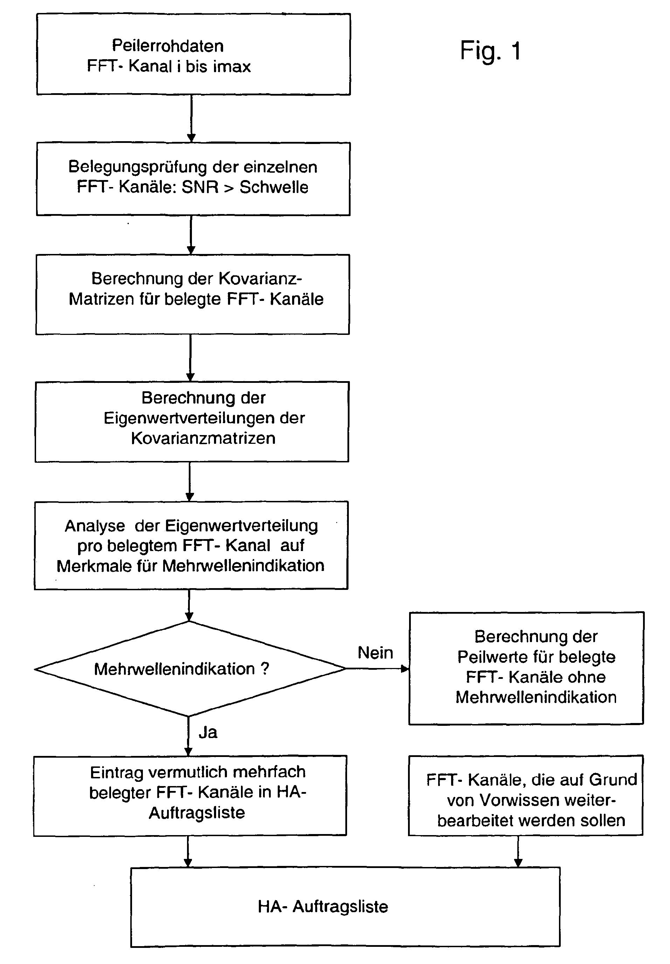

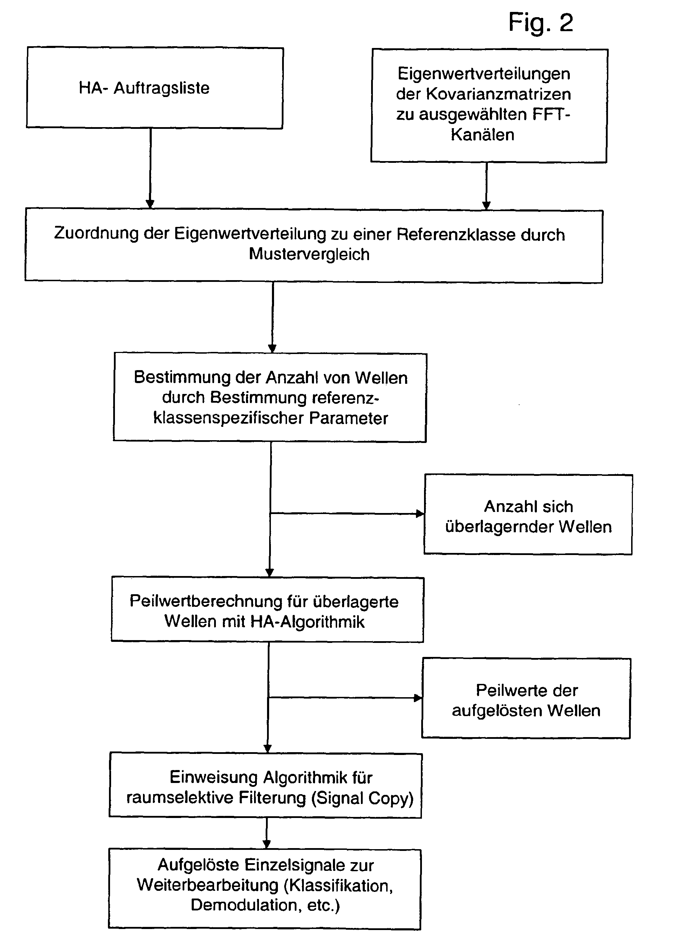

Die Erfindung wird anhand eines konkreten Ausführungsbeispiels näher erläutert. Die beiden Ablaufdiagramme gemäß Fig. 1 und Fig. 2 zeigen den erfindungsgemäßen Ablauf in der ersten Verarbeitungsstufe (Fig. 1) und der nachfolgenden Verarbeitungsstufe (Fig. 2) für jeden FFT-Kanal.

Der Ablauf gemäß Fig. 1 stellt das Auswahlverfahren zur Ermittlung von FFT-Kanälen dar, für die die rechenleistungsintensiven hochauflösenden Algorithmen (wie in der nachfolgenden Fig. 2 dargestellt) genutzt werden sollen. Zur Auswahl dieser FFT-Kanäle werden die Eigenwertverteilungen der Kovarianzmatrizen berechnet und hinsichtlich charakteristischer Merkmale für Mehrwellenindikation analysiert.. Weiterhin werden in dem in Fig.1 dargestellten Ablauf bereits die Peilwerte für die FFT-Kanäle erzeugt, für die die Analyse keinen Mehrwelleneinfall indiziert, in denen somit also Einwelleneinfall festgestellt wird. Für die Berechnung dieser Peilwerte können herkömmliche Algorithmen mit geringerem Rechenleistungsbedarf eingesetzt werden (beispielsweise Interferometrie- bzw. Beamformingalgorithmen).

Die in Fig. 1 veranschaulichten Signalverarbeitungsschritte haben insgesamt zum Ziel, den mit deutlich höherer erforderlicher Prozessleistung erfolgenden Ablauf gemäß dem Diagramm nach Fig. 2 nur für diejenigen FFT-Kanäle zu starten, die eine erhöhte Indikation für Mehrwelleneinfall aufweisen. Für die Gesamtheit an zu verarbeitenden FFT-Kanälen erhält man gemäß dem gestuften Vorgehen nach Fig.1 und Fig. 2 somit Peilergebnisse mit demselben vollständigen Aussagegehalt, wie er alternativ nur durch Anwendung der HA-Algorithmen auf alle FFT-Kanäle erzielbar wäre, wofür jedoch ein erheblich höherer Rechenaufwand eingesetzt werden müßte. Auch für die FFT-Kanäle, in denen nur Einwelleneinfall vorliegt, liefert das Verfahren zusätzliche Information gegenüber einer bloßen Anwendung herkömmlicher Algorithmik, da durch das Verfahren die Zuverlässigkeit der Peilwertbestimmung bestätigt wird. Ohne diese Bestätigung wäre für die einzelnen Peilwerte unklar, inwieweit sie durch Mehrwelleneinfall verfälscht sein können.

Nach Durchlaufen der in Fig. 1 dargestellten Rechenschritte liegen Peilergebnisse vor, die für FFT-Kanäle, in denen Einwelleneinfall festgestellt wurde, bereits das Endergebnis darstellen. Weiterhin liegt eine Liste mit FFT-Kanälen vor, in denen Mehrwelleneinfall wahrscheinlich ist und die deshalb weiter zu behandeln sind, und zwar gemäß dem in Fig. 2 dargestellten Ablauf.

Zum Ablauf gemäß Fig. 1 im einzelnen: Als Rohdaten für die Berechnung von Peilwerten stehen die komplexen Antennenspannungen der einzelnen Antennenelemente zur Verfügung. Über FFT werden aus diesen breitbandigen Signalen die entsprechenden schmalbandigen Signale für jeden FFT-Kanal generiert. Sie bilden die Ausgangsdaten für das nachfolgend erläuterte schrittweise Vorgehen.
Zunächst wird für jeden FFT- Kanal eine Belegungsprüfung durchgeführt. Der betrachtete Kanal wird als möglicher Kandidat für HA-Verfahren nur dann weiter betrachtet, wenn das SNR (signal-to-noise-ratio) über einem vorgegebenen Schwellwert liegt. Der Schwellwert leitet sich aus der Forderung ab, dass im Falle tatsächlich vorliegenden Mehrwelleneinfalls aus der weiteren HA-Signalverarbeitung eine hinreichend gute Qualität der Ergebnisse erreicht werden soll.

Im weiteren geht es darum, eine erhöhte Wahrscheinlichkeit für Mehrwelleneinfall in den einzelnen FFT-Kanälen (Mehrwellenindikation) zu erkennen. Hierzu werden die Merkmale der aus der Kovarianzmatrix abgeleiteten Eigenwertverteilung auswertet. Dazu müssen Signal- und Rauscheigenwerte getrennt werden bzw. festgestellt werden, ob die Eigenwertverteilung nur einen (Einwelleneinfall) oder mehr als einen Signaleigenwert (Mehrwelleneinfall) enthält. Diese Aufgabe kann mittels frequenzbereichs- und anlagenspezifischen Schwellwerten gelöst werden.

Alle Kanäle, die nach den obigen Kriterien mit der aufwendigeren zweiten Verfahrensstufe (Fig. 2) untersucht werden sollen, werden in eine HA-Auftragsliste eingetragen.

Die rechenleistungsintensiven Verarbeitungsschritte der hochauflösenden Peilalgorithmik sind im Ablaufdiagramm gemäß Fig. 2 enthalten. Sie werden nur noch für die FFT-Kanäle durchgeführt, die gemäß dem in Fig.1 dargestellten Ablauf in die HA-Auftragsliste eingetragen wurden. Hinsichtlich der für die Bearbeitung nach Fig. 2 benötigten Rechenleistung steht der Verarbeitungsblock " Peilwertberechnung mit HA-Algorithmik" mit deutlichem Abstand an erster Stelle. Die im Ablauf zuvor erforderliche Anzahlschätzung setzt auf den bereits in Fig. 1 ermittelten Eigenwertverteilungen auf. Während in der ersten Verfahrensstufe gemäß Fig.1 lediglich festgestellt wird, ob in der Eigenwertverteilung eines FFT-Kanals mehr als ein Signaleigenwert vorhanden ist, wird nun deren Anzahl i>1 genauer bestimmt (Anzahlschätzung).

Die Anzahlschätzung gliedert sich in zwei Schritte. Im ersten Schritt wird die individuelle Struktur der Eigenwertverteilung durch Mustervergleich mit charakteristischen Referenzkurvenverläufen erfasst, im zweiten Schritt Kurvenparameter bestimmt und daraus die Anzahl zur Energie im FFT-Kanal beitragender Wellen abgeleitet Die Zahl der Eigenwerte, die nach Größe geordnet die einem einzelnen FFT-Kanal zugeordnete Eigenwertverteilung bilden, ist gleich der Anzahl der Antennenelemente der genutzten Antennenanordnung. Die Eigenwertverteilungen können durch charakteristische Strukturmerkmale charakterisiert und an Hand von Referenzmustern verschiedenen Klassen zugeordnet werden. Typische zu erkennende Referenzmuster sind beispielsweise Kurvenverläufe mit großer Differenz zwischen größtem und kleinstem Eigenwert und einem deutlichen Sprung zwischen zwei Eigenwerten j und j+1. Eine andere Referenzklasse stellen Kurvenverläufe mit gleichmäßigem Abfall ohne erkennbare Sprungstelle dar. Wieder eine andere beschreibt Kurvenverläufe mit nur geringer Differenz zwischen größtem und kleinstem Eigenwert. Die Referenzkurven sind anlagen- und frequenzbereichsspezifisch und müssen experimentell ermittelt werden.

Die Kurvenverläufe der einzelnen Referenzklassen erlauben die Bestimmung von Parametern, aus denen die Anzahl beitragender Wellen abgeleitet werden kann. Dies geschieht zur Anzahlschätzung anschließend im zweiten Bearbeitungsschritt.

Wird für einen FFT-Kanal die gemäß Fig.1 festgestellte Mehrwellenindikation durch das Ergebnis der Anzahlschätzung bestätigt, dann stellt die ermittelte Anzahl erkannter Wellen einen notwendig benötigten Einweisungsparameter für die HA-Peilwertberechnung dar. Bestätigt die Anzahlschätzung die Mehrwellenindikation für einen FFT-Kanal dagegen nicht und führt zu der Aussage, dass die detektierte Energie entgegen der nach Fig.1 ermittelten Mehrwellenindikation doch nur von einer einzigen Welle stammt, wird die weitere HA-Berechnung abgebrochen und der zugehörige Peilwert wie in Fig.1 mit herkömmlicher Algorithmik berechnet. Wäre dies in vielen FFT-Kanälen der Fall, dann würde eine verhältnismäßig hohe Rechenleistung benötigt, ohne dass Peilwerte mit hochauflösender Algorithmik berechnet werden. In Applikationen, in denen Rechenleistung in Folge Payloadbeschränkungen und/oder der Forderung schritthaltender Verarbeitung kritisch ist, ist eine möglichst strenge Konzentration der verfügbaren Rechenleistung auf FFT-Kanäle, in denen nur die HA-Peilwertberechnung zuverlässige Ergebnisse liefern kann, notwendig. Ziel der Verarbeitung nach Fig. 1 ist es deshalb, diesen Anteil dadurch möglichst hoch zu halten, dass Mehrwelleneinfall bereits in den Bearbeitungsschritten der Fig.1 möglichst zuverlässig erkannt wird.

Für alle Kanäle, in denen i>1 bestätigt wird, wird dann die hochauflösende Peilwertberechnung durchgeführt. Für jeden der ausgewählten FFT-Kanäle wird die dem Ergebnis der Anzahlschätzung entsprechende Anzahl von Peilwerten berechnet. Da die hierzu pro FFT-Kanal benötigte Rechenleistung von der Zahl der zu berechnenden Peilwerte abhängt, liefert die Anzahlschätzung auch Vorgaben zur effizienten Steuerung der bereitzustellenden Rechenleistung, insbesondere wenn die Rechenleistung durch verteilte Rechenwerke bereitgestellt wird.

Die ermittelten Peilwerte erlauben anschließend je nach Auftragslage die Einweisung der Algorithmik für die raumselektive Filterung (Signal Copy) ausgewählter Emissionen. Es handelt sich dabei um ein digitales Beamforming, bei dem die Hauptkeule in Richtung des gewünschten Targetsignals ausgerichtet wird, während in Richtung der überlagerten Störsignale Nullstellen des Antennendiagramms ausgebildet werden. Nach erfolgter Signaltrennung stehen die raumgefilterten Signale dann zur Weiterverarbeitung (Klassifikation, Demodulation,...) zur Verfügung.

### Literaturangaben:

### Konventionelle Peilverfahren:

Friedrich Jondral: "Einführung in die Grundlagen verschiedener Peilverfahren", Sonderdruck aus ntzArchiv Heft 2 und 3/1987

### Peilwertberechnung mit hochauflösender Peilalgorithmik:

R.O. Schmidt: A Signal Subspace Approach to Multiple Emitter Location and Spectral Estimation", Ph.D. Thesis, Stanford University, Stanford, CA, Nov. 1981
Wax M., Ziskind I.: "ML localization of multiple sources by alternating projection", IEEE Trans. ASSP, Vol. 36, pp. 1553 -1560, Oct. 1988
R.O. Schmidt, Raymond E.Franks: Multiple Source DF Signal Processing: An Experimental System, IEEE Trans.Antennas Propagat., Vol. AP-34, No3, pp.281-290,March 1986

### Anzahlschätzung:

Wax.M, Kailath T.: "Detection of Signals by Information Theoretic Criteria", IEEE Trans. ASSP, Vol.33, pp. 387-392, April 1985
Wax.M, Ziskind I.: "Detection of the number of coherent signals by the MDL principle", IEEE Trans. ASSP, Vol.37, pp. 1190-1196, Aug. 1989

## Patentansprüche

1. Hochauflösendes Peilverfahren mit adaptiver Minimierung der erforderlichen Rechenleistung für FFT-basierte Breitbandpeilsysteme, wobei durch schrittweise Analyse der den FFT-Kanälen zugeordneten Eigenwertverteilungen eine für die Behandlung von Ein- und Mehrwelleneinfall in den einzelnen FFT-Kanälen bedarfsgerechte Zuordnung von in Rechenaufwand und Leistungsprofil stark unterschiedlichen an sich bekannten Peilalgorithmen erfolgt, wobei zur Auswahl mindestens zwei unterschiedliche, an sich bekannte Algorithmen gestellt werden, und diese sich einerseits in den gebotenen Fähigkeiten für die Behandlung von Einwelleneinfall, N=1, und Mehrwelleneinfall, N>1 und andererseits in der benötigten Rechenleistung unterscheiden.

2. Verfahren nach Anspruch 1, **dadurch gekennzeichnet, dass** die Generierung der Peilwerte in zwei Verfahrensstufen erfolgt:
- Erzeugung der Rohdaten und Prüfung der einzelnen FFT-Kanäle auf Mehrwellenindikation durch Berechnung und Analyse der Eigenwertverteilung, und anschließende Berechnung der Peilwerte für FFT-Kanäle ohne Mehrwellenindikation unter Nutzung an sich bekannter Peilalgorithmen für Einwelleneinfall;
- für diejenigen FFT-Kanäle, für die aufgrund der ersten Verfahrensstufe eine Mehrwellenindikation vorliegt, erfolgt eine Berechnung der Peilwerte mit an sich bekannten hochauflösenden, für Mehrwelleneinfall geeignete Peilalgorithmen.

3. Verfahren nach Anspruch 2, **dadurch gekennzeichnet, dass** die erste Verfahrensstufe in folgenden Schritten abläuft:
- Empfang des breitbandigen Empfangssignals mit mehreren parallelen Breitbandpeilempfängern mit digitaler Signalverarbeitung,
- spektrale Zerlegung des breitbandigen Empfangssignals in schmalbandige FFT-Kanäle in den einzelnen Breitbandpeilempfängern,
- Bildung der Kovarianzmatrix und Berechnung der Eigenwertverteilungen für die einzelnen FFT-Kanäle,
- Analyse der Eigenwertverteilungen und Bestimmung der FFT-Kanäle mit und der FFT-Kanäle ohne Mehrwellenindikation sowie Auswahl der FFT-Kanäle, die der nachfolgenden zweiten Verfahrensstufe zugeführt werden,
- Berechnung der Peilwerte für FFT-Kanäle ohne Mehrwellenindikation unter Nutzung an sich bekannter Peilalgorithmen für Einwelleneinfall.

4. Verfahren nach Anspruch 2, **dadurch gekennzeichnet, dass** die zweite Verfahrensstufe in folgenden Schritten abläuft, und zwar nur für solche FFT-Kanäle, die in der ersten Verfahrensstufe ausgewählt wurden:
- Bestimmung der Anzahl je FFT-Kanal überlagerten Wellen durch
- Zuordnung der Eigenwertverteilung zu einer Referenzklasse durch Mustererkennung charakteristischer Formen des Kurvenverlaufs,
- Trennung von Signal- und Rauscheigenwerten mit Auswertung referenzklassenspezifischer Parameter der Eigenwertverteilung zur Bestimmung der Anzahl N peilbarer richtungsselektiv trennbarer Energiebeiträge. In der Eigenwertanalyse wird mittels einstellbarer, Anlagen und Szenario abhängiger Schwellwerte die Anzahl erkannter Signaleigenwerte ermittelt.
- Berechnung der Peilwerte mit hochauflösenden Peilalgorithmen, wobei pro FFT-Kanal so viele Peilwerte ermittelt werden, wie durch die zuvor durchgeführte Anzahlschätzung jeweils vorgegeben sind.

5. Verfahren nach einem der Ansprüche 2 bis 4, **dadurch gekennzeichnet, dass** in beiden Verfahrensstufen zur Peilwertbestimmung auf dieselben Signalrohdaten zurückgegriffen wird.

6. Verfahren nach Anspruch 4, **dadurch gekennzeichnet, dass** aus dem Verfahrensschritten der Eigenwertanalyse und der Anzahlschätzung Steuerungsinformation für die Parallelverarbeitung mehrerer FFT-Kanäle in einem Parallelrechenwerk abgeleitet wird, indem die Abhängigkeit des Rechenaufwands vom Wert der Größe N sowie weiteren für die Anlage und das Szenario spezifische Parameter berücksichtigt wird.

## Claims

1. High-resolution direction-finding method with the required computation power for FFT-based broadband direction-finding systems being adaptively minimized, with direction-finding algorithms which are known per se but differ widely in terms of computation complexity and performance profile being allocated as required for handling of single-wave and multiple-wave incidence in the individual FFT channels by step-by-step analysis of the own-value distributions associated with the FFT channels, with at least two different algorithms which are known per se being made available for selection, which algorithms differ on the one hand in the available capabilities for handling single-wave incidence, N=1 and multiple-wave incidence, N>1, and on the other hand in the computation power required.

2. Method according to Claim 1, **characterized in that** the bearing values are generated in two method steps:
- production of the raw data and checking of the individual FFT channels for multiple-wave indication by calculation and analysis of the own-value distribution, followed by calculation of the bearing values for FFT channels without multiple-wave indication, using direction-finding algorithms which are known per se for single-wave incidence;
- for those FFT channels for which there is a multiple-wave indication on the basis of the first method stage, bearing values are calculated using high-resolution direction-finding algorithms which are known per se and are suitable for multiple-wave incidence.

3. Method according to Claim 2, **characterized in that** the first method stage is carried out in the following steps:
- reception of the broadband received signal by a plurality of parallel broadband direction-finding receivers with digital signal processing,
- spectral breakdown of the broadband received signal into narrowband FFT channels in the individual broadband direction-finding receivers,
- formation of the covariance matrix and calculation of the own-value distributions for the individual FFT channels,
- analysis of the own-value distributions and determination of the FFT channels with and the FFT channels without multiple-wave indication, as well as selection of those FFT channels which are supplied to the downstream second method stage,
- calculation of the bearing values for FFT channels without multiple-wave indication using direction-finding algorithms which are known per se for signal-wave incidence.

4. Method according to Claim 2, **characterized in that** the second method stage is carried out in the following steps, to be precise only for those FFT channels which have been selected in the first method stage:
- determination of the number of waves superimposed in each FFT channel by
- association of the own-value distribution with a reference class by pattern recognition of characteristic forms of the curve profile,
- separation of signal and noise own-values with evaluation of reference-class-specific parameters of the own-value distribution in order to determine the number N of energy contributions whose direction can be found and which can be separated on a directionally selective basis. The number of identified signal own-values is determined in the own-value analysis by means of variable threshold values which depend on installations and the scenario.
- calculation of the bearing values using high-resolution direction-finding algorithms, with as many bearing values as are in each case predetermined by the previously carried out number estimate being determined per FFT channel.

5. Method according to one of Claims 2 to 4, **characterized in that** the same raw signal data is used for bearing value determination in both method stages.

6. Method according to Claim 4, **characterized in that** the method steps of own-value analysis and number estimation are used to derive control information for the parallel processing of a plurality of FFT channels in a parallel computation mechanism, by taking account of the relationship between the computation complexity and the value of the variable N, and of further parameters which are specific to the installation and the scenario.

## Revendications

1. Procédé de relèvement à haute résolution avec réduction adaptative de la puissance de calcul nécessaire pour des systèmes de relèvement à large bande sur base de FFT, une affectation en fonction du besoin des algorithmes de relèvement connus en eux-mêmes, lesquels présentent des efforts de calcul et des profils de puissance très différents et qui sont destinés au traitement de l'incidence des ondes uniques et des ondes multiples dans chacun des canaux de la FFT, étant effectuée par une analyse étape par étape des distributions des valeurs propres associées aux canaux FFT, au moins deux algorithmes différents connus en eux-mêmes étant proposés à la sélection et ceux-ci se différenciant d'une part au niveau des capacités offertes de traitement de l'incidence des ondes uniques, N = 1, et de l'incidence des ondes multiples, N > 1, et d'autre part au niveau de la puissance de calcul requise.

2. Procédé selon la revendication 1, **caractérisé en ce que** la génération des valeurs de relèvement s'effectue en deux étapes de procédé:
- Génération des données brutes et recherche d'une procédé indication de la présence d'ondes multiples sur chacun des canaux de la FFT en calculant et en analysant la distribution des valeurs propres et ensuite calcul des valeurs de relèvement pour les canaux de FFT sans indication d'ondes multiples en utilisant des algorithmes de relèvement connus en eux-mêmes pour l'incidence des ondes uniques,
- pour les canaux de FFT pour lesquels la première étape du procédé révèle la présence d'une indication d'ondes multiples, calcul des valeurs de relèvement avec des algorithmes de relèvement à haute résolution connus en eux-mêmes et appropriés pour l'incidence des ondes multiples.

3. Procédé selon la revendication 2, **caractérisé en ce que** la première étape du procédé se déroule selon les étapes suivantes :
- Réception du signal reçu à large bande avec plusieurs récepteurs de relèvement à large bande en parallèle avec traitement numérique du signal,
- décomposition spectrale du signal reçu à large bande en canaux de FFT à bande étroite dans chacun des récepteurs de relèvement à large bande,
- formation de la matrice de covariante et calcul des distributions des valeurs propres pour chacun des canaux de FFT,
- analyse des distributions des valeurs propres et détermination des canaux de FFT avec et des canaux de FFT sans indication des ondes multiples ainsi que sélection des canaux de FFT qui sont soumis à la deuxième étape du procédé ci-après,
- calcul des valeurs de relèvement pour les canaux de FFT sans indication d'ondes multiples en utilisant les algorithmes de relèvement connus en eux-mêmes pour l'incidence des ondes uniques.

4. Procédé selon la revendication 2, **caractérisé en ce que** la deuxième étape du procédé se déroule en les étapes suivantes, et ce uniquement pour les canaux de FFT qui ont été sélectionnés dans la première étape du procédé:
- Détermination du nombre d'ondes superposées de chaque canal de FFT par
- affectation de la distribution des valeurs propres à une classe de référence par détection du modèle des formes caractéristiques du tracé de la courbe,
- séparation des valeurs propres du signal et du bruit avec évaluation des paramètres spécifiques à la classe de référence de la distribution des valeurs propres afin de déterminer le nombre N de contributions énergétiques relevables à direction sélective et pouvant être isolées. Le nombre de valeurs propres détectées du signal est déterminé dans l'analyse des valeurs propres au moyen de valeurs de seuil réglables dépendantes des équipements et du scénario.
- Calcul des valeurs de relèvement avec des algorithmes de relèvement à haute résolution, le nombre de valeurs de relèvement déterminées pour chaque canal de FFT correspondant à chaque fois à celui prédéfini par l'évaluation du nombre effectuée précédemment.

5. Procédé selon l'une des revendications 2 à 4, **caractérisé en ce que** dans les deux étapes du procédé, les mêmes données de signal brutes sont employées pour déterminer la valeur du relèvement.

6. Procédé selon la revendication 4, **caractérisé en ce que** des informations de commande pour le traitement en parallèle de plusieurs canaux de FFT dans un calculateur parallèle sont dérivées des étapes du procédé de l'analyse des valeurs propres et de l'évaluation du nombre en tenant compte de la dépendance de la complexité du calcul à la valeur de la grandeur N ainsi qu'à d'autres paramètres spécifiques à l'équipement et au scénario.
